# EUROPÄISCHE PATENTSCHRIFT

(11) **EP 1 346 161 B1**
(45) Veröffentlichungstag und Bekanntmachung des Hinweises auf die Patenterteilung: **03.11.2004**
(21) Anmeldenummer: 02805336.1
(22) Anmeldetag: 18.12.2002
(51) Int. Cl.: F16C 11/06, B60R 1/066, B60R 1/072

(54) **GELENKVORRICHTUNG INSBESONDERE ZUM VERSTELLEN VON RÜCKBLICKSPIEGELN FÜR KRAFTFAHRZEUGE**
HINGE DEVICE, ESPECIALLY FOR ADJUSTING THE REAR VIEW MIRRORS OF MOTOR VEHICLES
SYSTEME D'ARTICULATION DESTINE NOTAMMENT A REGLER DES RETROVISEURS DE VEHICULES AUTOMOBILES

(30) Priorität: 21.12.2001 DE 10163318
(43) Veröffentlichungstag der Anmeldung: 24.09.2003
(73) Patentinhaber: MEKRA Lang GmbH & Co. KG, 90765 Fürth (DE)
(72) Erfinder: LANG, Heinrich, 91465 Ergersheim (DE); SEIBOTH, Wolfgang, 91438 Bad Windsheim (DE); CENTMAYER, Stefan, 91465 Ergersheim (DE)
(74) Vertreter: Winter, Brandl, Fürniss, Hübner, Röss, Kaiser, Polte Partnerschaft
(86) Internationale Anmeldenummer: PCT/EP2002/014506
(87) Internationale Veröffentlichungsnummer: WO 2003/054401

(56) Entgegenhaltungen:
- EP-A- 0 075 259
- DE-A- 19 902 756
- DE-C- 19 644 824
- FR-A- 2 356 198
- US-B1- 6 302 549

## Beschreibung

Die Erfindung betrifft eine Gelenkvorrichtung insbesondere zum Verstellen von Rückblickspiegeln für Kraftfahrzeuge nach dem Oberbegriff des Anspruchs 1 bzw. des Anspruchs 3.

Aus der EP 0590 510 B1 oder der EP 0654 377 A2 ist ein verstellbarer Rückblickspiegel bekannt, bei dem die Spiegelscheibe über eine Gelenkverbindung mit einer Trägerplatte verbunden ist. Die Gelenkverbindung umfaßt eine Kugelpfanne, die mit der Trägerplatte verbunden ist. In der Kugelpfanne ist ein halbkugelschalenförmiger Vorsprung eingepaßt, an der die Spiegelscheibe befestigt ist. Mittels einer Klemmverbindung wird der halbkugelschalenförmige Vorsprung in die Kugelpfanne gedrückt, so dass die Schwenkbarkeit der Gelenkverbindung in eine beliebige Richtung erhalten bleibt. Durch die Verschwenkbarkeit in beliebiger Richtung ergibt sich ein vergleichsweise großes Spiel. Durch dieses große Spiel wird die Genauigkeit der Spiegelverstellung eingeschränkt.

Aus der gattungsbildenden DE 196 44 824 C1 ist bekannt, zwischen Kugelpfanne und Vorsprung eine Kunststoffscheibe mit einem Steg auf der Außenseite und einem senkrecht dazu stehenden Steg auf der Innenseite vorzusehen. Die beiden Stege greifen in komplementär geformte Ausnehmungen in der Kugelpfanne und in dem Vorsprung ein. Durch diese Strukturierung der Kugelpfanne, der Kunststoffscheibe und des Vorsprungs wird die Führung der Spiegelverstellung auf zwei zueinander senkrecht stehende feste Drehachsen eingeschränkt. Allerdings neigt diese Konstruktion durch Verschleiß und Abnutzung zu vergrößertem Spiel.

Aus der DE 33 01 543 A1 ist ferner ein spielfreies Kugelgelenk bekannt, mit einer ersten Lagerschale und einer zweiten Lagerschale, die einen Gelenkkopf umschließen, sowie einer Verbindungseinrichtung zum Herstellen einer Klemmverbindung, mit der die Lagerschalen gegeneinander bzw. gegen den Gelenkkopf verspannbar sind.

Aus der DE 27 41 290 A1 ist eine spielfrei aufgehängte Spiegelplatte bekannt, die erste Gelenkbauteile und zweite Gelenkbauteile aufweist, wobei das erste Gelenkbauteil starr mit dem Gehäuse verbunden ist.

Demgegenüber ist es Aufgabe der vorliegenden Erfindung, eine Gelenkverbindung anzugeben, bei der das Spiel hinsichtlich der Verstellbarkeit dauerhaft gering bleibt. Weiter ist es Aufgabe einen verstellbaren Rückblickspiegel mit einer solchen Gelenkverbindung anzugeben.

Diese Aufgaben werden durch die Merkmale des Anspruchs 1, 3 bzw. 16 gelöst.

Dadurch, dass die konkave Strukturierung stärker gekrümmt ist als die konvexe Strukturierung liegen die Flächen der Strukturierungen nicht vollfläching aufeinander und insbesondere im Bereich der tiefsten Punkte der beiden Strukturierungen berühren sich diese nicht. Hierdurch kann die konvexe Strukturierung bei der unvermeidlichen Abnutzung tiefer in die konkave Strukturierung eintauchen, ohne dass die Abnutzung das Spiel erhöhen würde.

Durch die Strukturierung von Kugelpfanne, Gleitteil und Vorsprung mit einer Mehrzahl von in Aufsicht geradlinig, d. h. in einer Ebene verlaufenden Erhöhungen und Vertiefungen werden zwei fest im Raum orientierte und im Winkel zueinander angeordnete Drehachsen bzw. Drehebenen definiert und somit die gewünschte Verstell- bzw. Verschwenkbarkeit ermöglicht. Gleichzeitig werden Belastungen durch nicht in der jeweiligen Drehebene liegende Kräfte auf die Mehrzahl der Erhöhungen und Vertiefungen verteilt und somit reduziert. Zusätzlich wird durch diese Strukturierung die Führung in der jeweiligen Drehebene verbessert und Spiel weiter verringert. (Anspruch 2)

Gemäß einer alternativen Ausgestaltung der Erfindung nach Anspruch 3 mit einer Mehrzahl von zueinander komplementären Erhöhungen und Vertiefungen als Strukturierung ergibt die verbesserte Spielfreiheit auch ohne unterschiedliche Krümmung von konkaver und konvexer Strukturierung durch den vollflächigen Kontakt der zueinander komplementären Strukturierungen.

Gemäß einer vorteilhaften Ausgestaltung der Erfindung stehen die beiden festen Drehachsen senkrecht aufeinander, wodurch die notwendigen Verstellwege minimiert werden. (Anspruch 4)

Gemäß einer weiteren vorteilhaften Ausgestaltung ist das Gleitteil halbkugelschaleförmig und somit der Form der Kugelpfanne bzw. des Vorsprungs angepaßt. Dadurch wird die Kraftübertragung zwischen den beiden Gelenkbauteilen vergleichmäßigt. (Anspruch 5)

Gemäß einer weiteren vorteilhaften Ausgestaltung bedeckt die Strukturierung vollflächig die Innenseite der Kugelpfanne, die der Kugelpfanne zugewandte Seite des Vorsprungs sowie äußere und innere Seite des Gleitteils. Hierdurch wird die erfindungsgemäß strukturierte Oberfläche maximiert und die Verteilung der Kräfte homogenisiert. (Anspruch 6)

Durch die wellenförmige Ausgestaltung der Strukturierung wird die Verteilung der Kräfte ebenfalls homogenisiert und Kraftspitzen vermieden. (Anspruch 7)

Dadurch, dass das Gleitteil aus einem schwingungsdämpfenden Material besteht, wird die Vibrationsanfälligkeit eine Rückblickspiegels mit einer erfindungsgemäßen Gelenkverbindung verringert. (Anspruch 8)

Die vorteilhafte Ausgestaltung der Erfindung mit einem eine zentrale Öffnung in Kugelpfanne, Gleitteil und Vorsprung durchsetzenden Verbindungsstift stellt eine kompakte Verbindungseinrichtung zwischen den beiden Gelenkbauteilen dar. (Anspruch 9)

Das Gleitteil kann in vorteilhafter Weise zwischen Vorsprung und Kugelpfanne (Anspruch 10 und 11), auf der inneren, konvexen Seite der Kugelpfanne (Anspruch 12 und 13) oder auf der äußeren, konkaven Seite des Vorsprungs (Anspruch 14 und 15) angeordnet werden. Hierbei bestimmt die Größe der zentralen Öffnungen auf einfache Weise den Schwenkbereich der Gelenkvorrichtung.

Eine derartige Gelenkvorrichtung ist besonders für verstellbare Rückblickspiegel geeignet. Hierbei ist die verstellbare Spiegelscheibe mittels der erfindungsgemäßen Gelenkvorrichtung mit dem Spiegelträger verbunden. (Anspruch 16)

Die Erfindung wird nachfolgend anhand der Beschreibung von Ausführungsbeispielen unter Bezugnahme auf die Zeichnung näher erläutert. Es zeigen:
Fig. 1 eine perspektivische Explosionsdarstellung der wesentlichen Elemente einer ersten Ausführungsform der Erfindung schräg von oben;
Fig. 2 eine perspektivische Explosionsdarstellung der wesentlichen Elemente der ersten Ausführungsform der Erfindung schräg von unten;
Fig. 3 eine Schnittdarstellung der beispielhaften Ausführungsform nach Fig. 1 und 2;
Fig. 4 eine schematische Darstellung der unterschiedlichen Krümmung von konvexer und konkaver Strukturierung;
Fig. 5 eine zweite Ausführungsform der Erfindung, und
Fig. 6 eine dritte Ausführungsform der Erfindung.

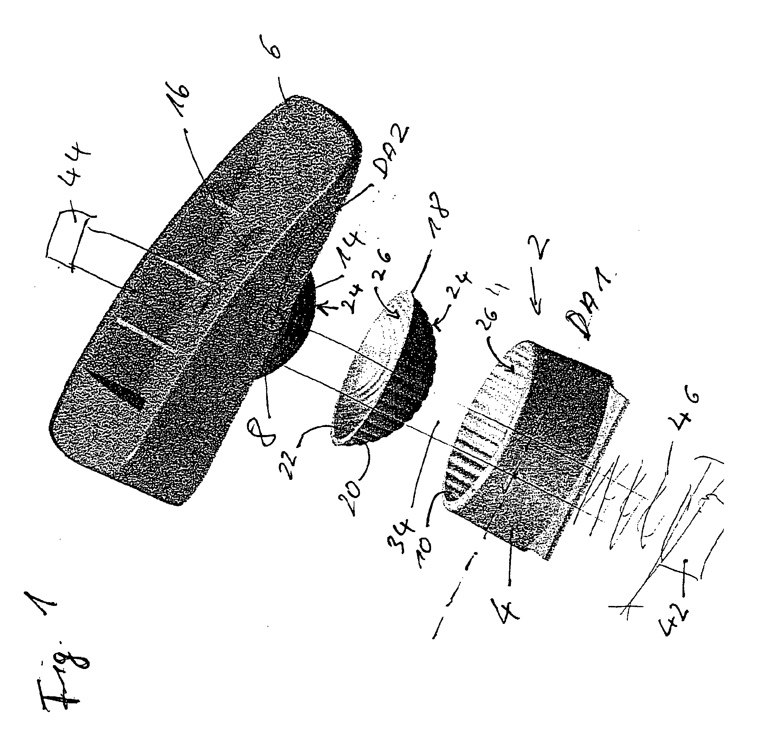

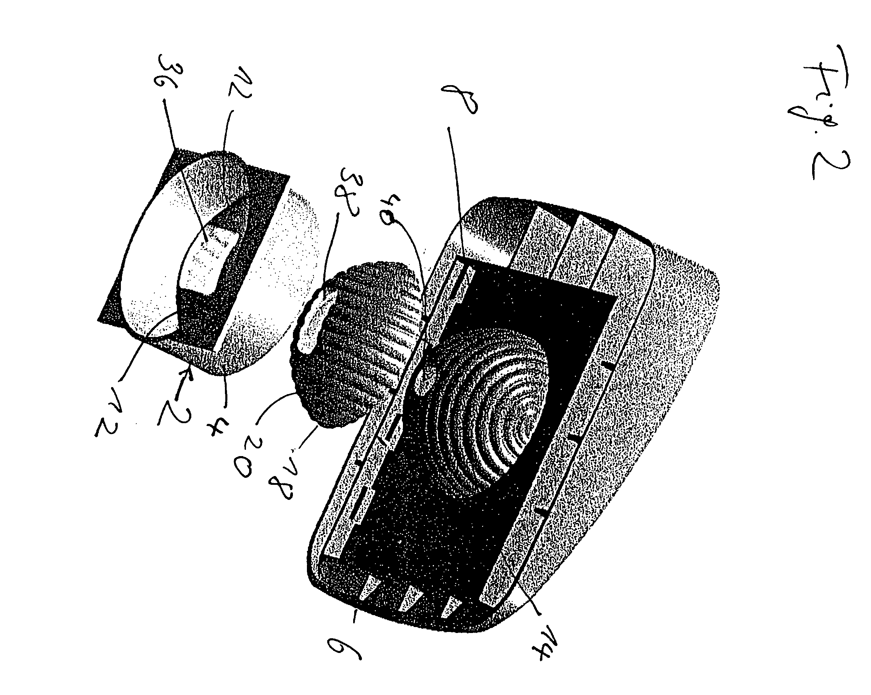

Fig. 1, 2 und 3 zeigen eine erste Ausführungsform der erfindungsgemäßen Gelenkvorrichtung in Explosionsdarstellung. Die Gelenkvorrichtung umfaßt ein erstes Gelenkbauteil 2 mit einer Kugelpfanne 4 und ein zweites Gelenkbauteil 6 mit einem kugelabschnittsförmigen Vorsprung 8. Die Kugelpfanne 4 ist halbkügelschalenförmig mit einer äußeren, konkaven Seite 10 und einer inneren, konvexen Seite 12. Der Vorsprung 8 ist ebenfalls halbkugelschalenförmig mit einer inneren, konvexen Seite 14 und einer äußeren, konkaven Seite 16. Der kugelabschnittsförmige Vorsprung 8 paßt in die Kugelpfanne 4. Zwischen Kugelpfanne 4 und Vorsprung 8 ist ein halbkugelschalenförmiges Gleitteil 18 vorgesehen, das eine innere, konvexe Seite 20 und eine äußere, konkave Seite 22 aufweist.

Die innere, konvexe Seite 20 des Gleitteils 18 ist mit einer konvexen Strukturierung 24 und die äußere, konkave Seite 18 der Kugelpfanne 4 mit einer konkaven Strukturierung 26 versehen. Die konvexe und die konkave Strukturierung 24 und 26 sind komplementär zueinander geformt und passen teilweise formschlüssig ineinander. Hierdurch wird zwischen dem ersten Gelenkbauteil 2 und dem Gleitteil 18 nur eine Gleitbewegung um eine erste Drehachse DA1 ermöglicht. In den Figuren 1, 2 und 3 liegt die erste Drehachse DA1 horizonal in der Zeichenebene.

Die äußere, konkave Seite 22 des Gleitteils 18 ist ebenfalls mit der konkaven Strukturierung 26 und die innere, konvexe Seite 14 des Vorsprungs 8 mit der komplementär hierzu geformten konvexen Strukturierung 24 versehen. Hierdurch wird zwischen Gleitteil 18 und zweitem Gelenkbauteil 6 nur eine Gleitbewegung um eine zweite Drehachse DA2 ermöglicht, die auf der ersten Drehachse DA2 senkrecht steht und auch senkrecht zur Blattebene steht.

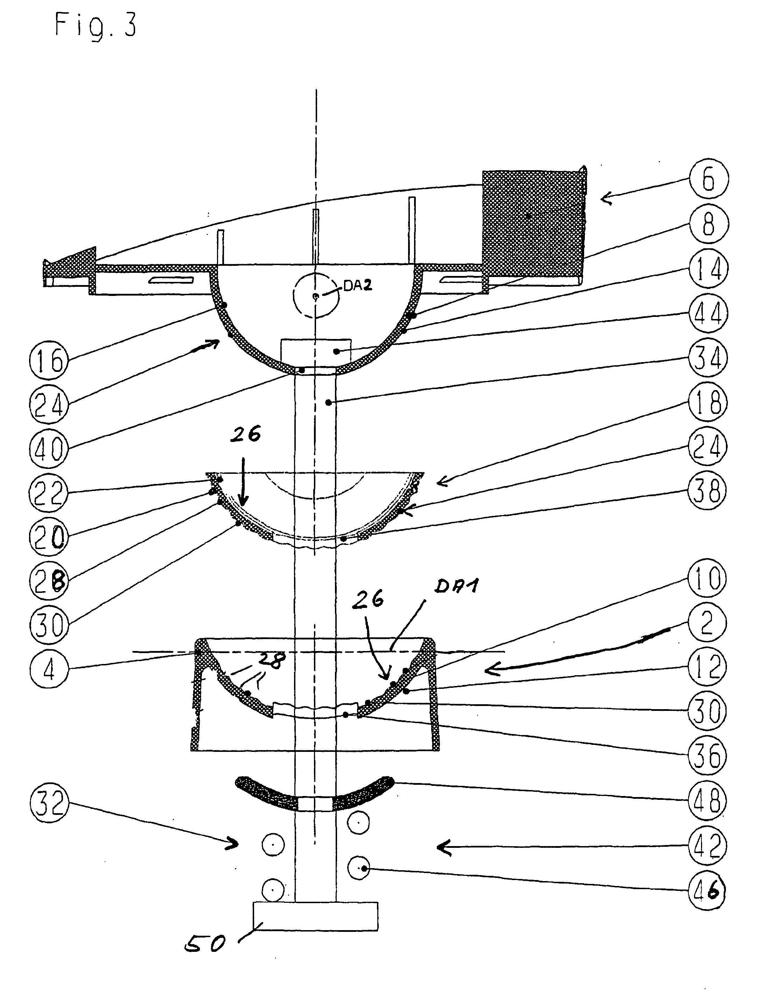

Die zueinander komplementären Strukturierungen 24 und 26 bestehen jeweils aus einer Mehrzahl von in Aufsicht gerade verlaufenden Erhöhungen 28 und Vertiefungen 30. In Schnittansicht in einer zur jeweiligen Drehachse DA1 und DA2 parallel verlaufenden Schnittebene ergibt sich ein wellenförmiger Verlauf der Erhöhungen 28 und Vertiefungen 30, wie dies aus Fig. 3 hinsichtlich der konvexen Strukturierung 24 auf der inneren, konvexen Seite 20 des Gleitteils 18 und der konkaven Strukturierung 26 auf der äußeren, konkaven Seite 10 der Kugelpfanne 4 zu ersehen ist.

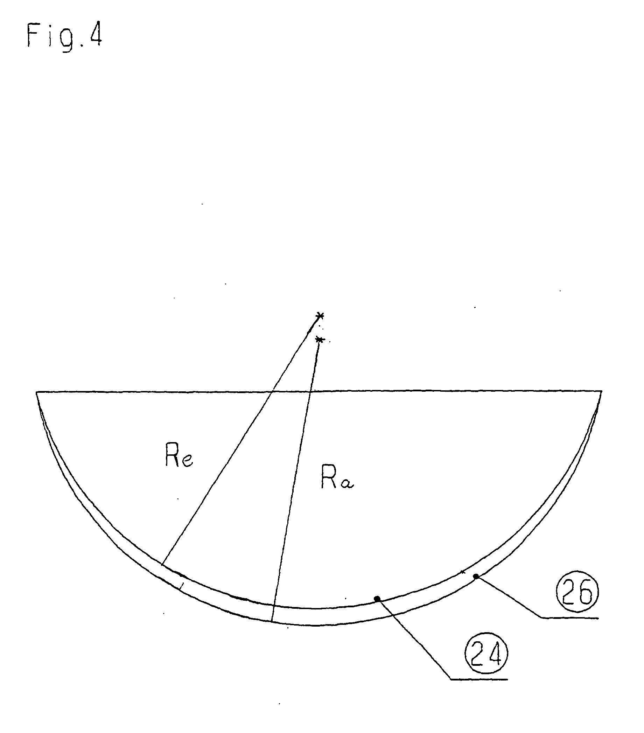

Kugelpfanne 4, Vorsprung 8 und Gleitteil 18 bzw. die jeweiligen konvexen und konkaven Strukturierungen 24 und 26 auf diesen Bauteilen sind halbschalenförmig ausgebildet. Dabei ist die konkave Strukturierung 26 stärker gekrümmt als die konvexe Strukturierung 24. D. h. der Krümmungsradius Re der konvexen Strukturierungen 24 ist größer als der Krümmungsradius Ra der konkaven Strukturierungen 26, wie das schematisch in Fig. 4 dargestellt ist. Wenn die Strukturierungen 24 und 26 starr wären, würden sich die komplementären Strukturierungen 24 und 26 nur entlang einer Linie berühren. Da jedoch die Strukturierungen 24, 26 plastisch verformbar sind, ergibt sich eine geschlossene streifenförmige Kontaktfläche. Dadurch, dass die konkave Strukturierung 26 stärker gekrümmt ist als die konvexe Strukturierung 24 schieben sich die beiden Strukturierungen 24, 26 bei Abnutzung stärker ineinander, so dass auch bei längerem Gebrauch Spielfreiheit gegeben ist.

Alternativ können die zueinander komplementären Strukturierungen 24 und 26 auf vollflächig formschlüssig ineinander passen, wie dies in den Figuren 1, 2 und 5, 6 zeichnerisch angedeutet ist.

Durch eine Verbindungseinrichtung 32 werden erstes und zweites Gelenkbauteil 2 und 6 mit dem Gleitteil 18 in einer Klemmverbindung gehalten. Die Verbindungseinrichtung 32 umfaßt einen Verbindungsstift 34, der eine erste, eine zweite und eine dritte zentrale Öffnung 36, 38 und 40 in der Kugelpfanne 4, dem Gleitteil 18 und dem Vorsprung 8 durchsetzt. Der Verbindungsstift 34 weist am inneren Ende ein inneres Abstützmittel 42 und am äußeren Ende äußeres Abstützmittel 44 auf. Das äußere Abstützmittel 44, z B. in Form eines Schraubkopfes 44, stützt sich auf der äußeren, konkaven Seite 16 des Vorsprungs 8 ab. Das innere Abstützmittel 42 umfaßt eine Spiralfeder 46, eine Druckscheibe 48 und eine Schraubmutter 50. Die Druckscheibe 48 und die Spiralfeder 46 werden über den aus der ersten zentralen Öffnung 36 in der Kugelpfanne 4 ragenden Verbindungsstift 34 geschoben und mit der Schraubmutter 48 fixiert.

Die dritte zentrale Öffnung 40 in dem Vorsprung 8 entspricht in ihrem Durchmesser dem Durchmesser des Verbindungsstiftes 34. Die zweite zentrale Öffnung 38 in dem Gleitteil 18 ist eine Langloch, dessen größerer Durchmesser sich in Richtung einer Drehung um die zweite Drehachse DA2 erstreckt. Die erste zentrale Öffnung 36 in der Kugelpfanne 4 ist ein Langloch, dessen größerer Durchmesser sich in Richtung einer Drehung um die erste Drehachse DA1 erstreckt.

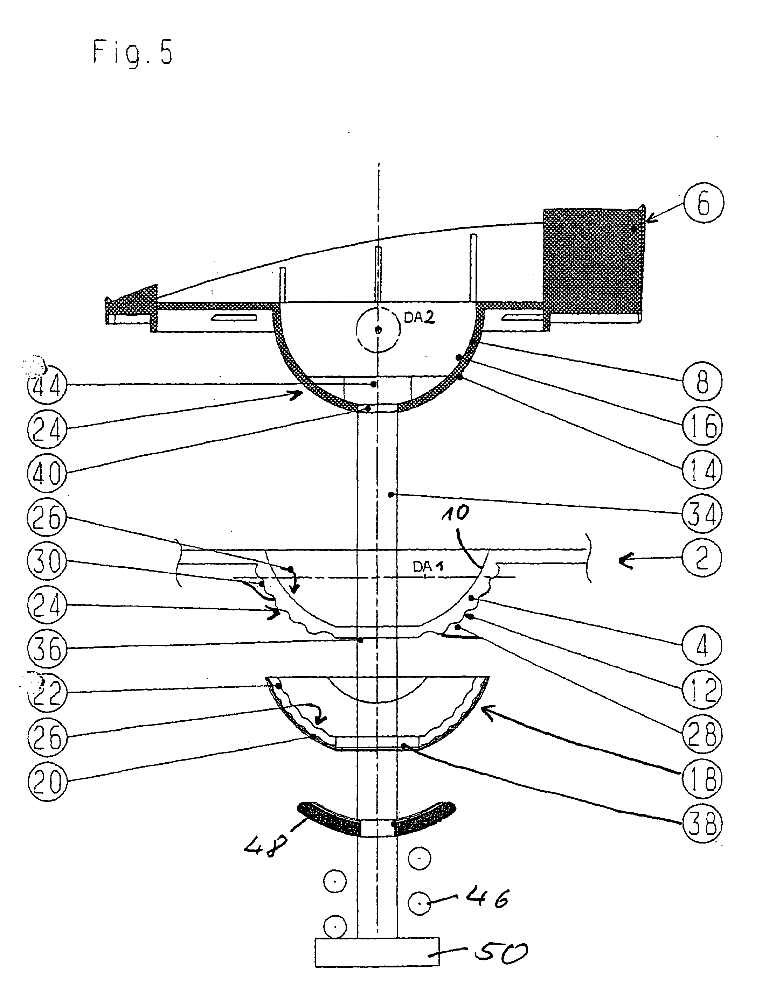

Fig. 5 stellt schematisch in einer Fig. 3 entsprechenden Darstellung eine zweite bevorzugte Ausführungsform dar. Diese zweite Ausführungsform der Erfindung unterscheidet sich von der ersten Ausführungsform dadurch, dass die Kugelpfanne 4 zwischen Vorsprung 8 und Gleitteil 18 angeordnet ist.

Das zweite Gelenkbauteil 6 mit Vorsprung 8, äußerer, konkaver Seite 16, innerer, konvexer Seite 14 und konvexer Strukturierung 24 auf der inneren, konvexen Seite 14 entspricht dem zweiten Gelenkbauteil 6 gemäß der ersten Ausführungsform nach den Figuren 1 bis 3. Die zur konvexen Strukturierung 24 auf der inneren, konvexen Seite 14 komplementäre konkave Strukturierung 26 ist im Unterschied zur ersten Ausführungsform auf der äußeren, konkaven Seite 10 der Kugelpfanne 4 angeordnet. Damit wird die zweite Drehachse DA2 zwischen Vorsprung 8 und Kugelpfanne 4 durch die darauf befindlichen komplementären Strukturierungen 24 und 26 festgelegt.

Auf der inneren, konvexen Seite 12 der Kugelpfanne 4 ist ebenfalls die konvexe Strukturierung 24 aufgebracht. Die Hierzu komplementäre konkave Strukturierung 26 ist auf der äußeren, konkaven Seite 22 des Gleitteils 18 vorgesehen. Damit wird die erste Drehachse DA1 durch die komplementären Strukturierungen 24 und 26 auf der inneren, konvexen Seite 12 der Kugelpfanne 4 bzw. auf der äußeren, konkaven Seite 22 des Gleitteils 18 festgelegt.

Die Verbindungseinrichtung 32 entspricht der Verbindungseinrichtung der ersten Ausführungsform. Hierbei wird das Gleitteil 18 durch die Druckscheibe 48 auf die innere, konvexe Seite 12 der Kugelpfanne 4 gedrückt. Die dritte zentrale Öffnung 40 in dem Vorsprung 8 und die zweite zentrale Öffnung 38 in dem Gleitteil 18 entsprechen im Durchmesser dem Durchmesser des Verbindungsstiftes 34. Die erste zentrale Öffnung in der Kugelpfanne 4 ist ebenfalls rund, jedoch wesentlich größer und definiert den Schwenkbereich zwischen den beiden Gelenkbauteilen 2 und 6.

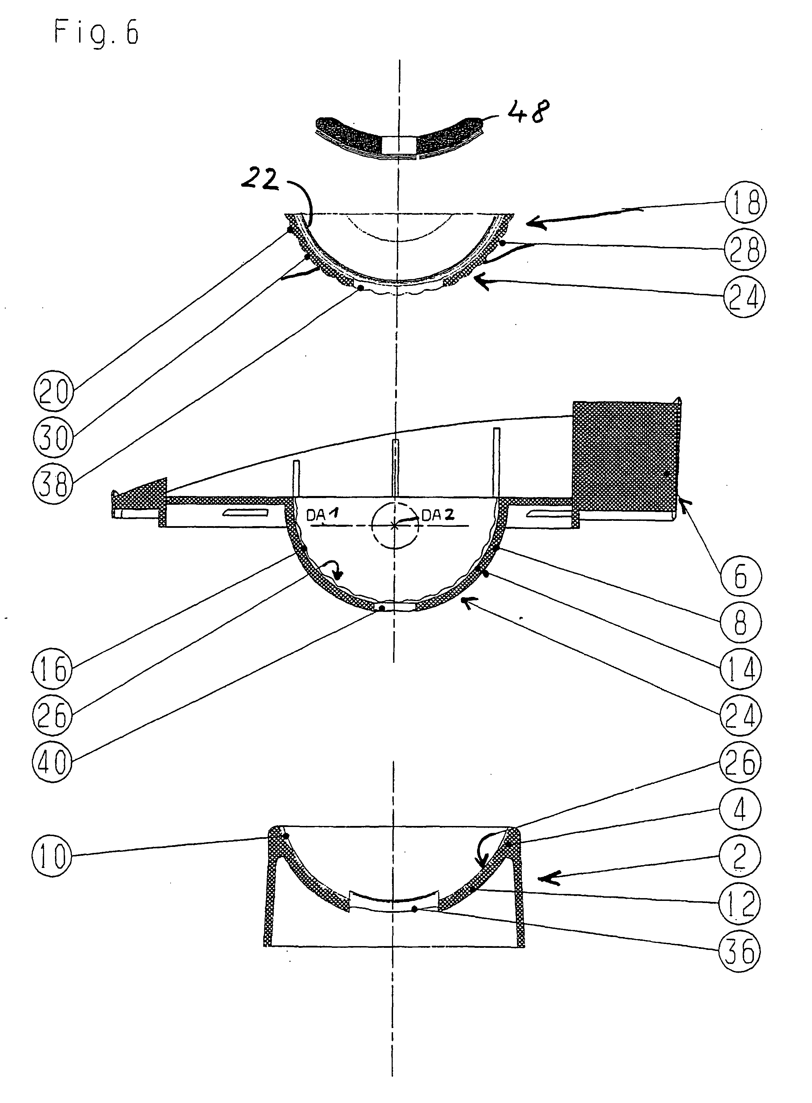

Fig. 6 zeigt eine dritte Ausführungsform der Erfindung, die sich von der ersten und zweiten Ausführungsform dadurch unterscheidet, dass der Vorsprung 8 zwischen Gleitteil 18 und Kugelpfanne 4 angeordnet ist. Die Verbindungseinrichtung ist in Fig. 6 der Einfachheit halber nicht dargestellt.

Die erste Drehachse DA1 wird zwischen Gleitteil 18 und Vorsprung 8 durch die konvexe Strukturierung 24 auf der inneren, konvexen Seite 22 des Gleitteils 18 und die hierzu komplementäre konkave Strukturierung 26 auf der äußeren, konkaven Seite 16 des Vorsprungs 8 festgelegt. Die zweite Drehachse DA2 wird zwischen Vorsprung 8 und Kugelpfanne 4 durch die konvexe Strukturierung 24 auf der inneren, konvexen Seite 14 des Vorprungs 8 und die hierzu komplementäre konkave Strukturierung 26 auf der äußeren, konkaven Seite 10 des der Kugelpfanne 4 festgelegt.

Die dritte zentrale Öffnung 40 in dem Vorsprung 8 entspricht in seinem Durchmesser dem Durchmesser des Verbindungsstiftes (nicht dargestellt). Die erste zentrale Öffnung 36 in der Kugelpfanne 4 und die zweite zentrale Öffnung 38 in dem Gleitteil 18 sind wesentlich größer ausgeführt und begrenzen wiederum den Schwenkbereich zwischen den beiden Gelenkbauteilen 2 und 6.

## Patentansprüche

1. Gelenkvorrichtung zur Anordnung von zwei Bauteilen im Winkel zueinander, insbesondere für Rückblickspiegel mit verstellbarer Spiegelscheibe, mit
einem ersten Gelenkbauteil (2) mit einer Kugelpfanne (4),
einem zweiten Gelenkbauteil (6), das einen im wesentlichen kugelabschnittsförmigen Vorsprung (8) aufweist, der in die Kugelpfanne (4) eingepaßt ist,
einem Gleitteil (18), und
einer Verbindungseinrichtung (32) zum Herstellen einer Klemmverbindung zwischen erstem Gelenkbauteil (2), Gleitteil (18) und zweitem Gelenkbauteil (6),
wobei die einander zugewandten Seiten von Kugelpfanne (4), Gleitteil (18) und Vorsprung (8) jeweils eine konvexe Strukturierung (24) und eine hierzu komplementär ausgebildete konkave Strukturierung (26) aufweisen,
wobei durch die Strukturierungen (24, 26) eine erste und eine zweite Drehachse (DA1, DA2) zwischen Gleitteil (18), Kugelpfanne (4) und Vorsprung (8) festgelegt wird,
**dadurch gekennzeichnet,**
**dass** die konkave Strukturierung (26) zumindest in entlastetem Zustand stärker gekrümmt ist als die konvexe Strukturierung (24).

2. Gelenkvorrichtung nach Anspruch 1, **dadurch gekennzeichnet,**
**dass** die zueinander komplementären Strukturierungen (24, 26) jeweils eine Mehrzahl von parallel und in Aufsicht geradlinig verlaufenden Erhöhungen (28) und Vertiefungen (30) umfassen.

3. Gelenkvorrichtung zur Anordnung von zwei Bauteilen im Winkel zueinander, insbesondere für Rückblickspiegel mit verstellbarer Spiegelscheibe, mit einem ersten Gelenkbauteil (2) mit einer Kugelpfanne (4),
einem zweiten Gelenkbauteil (6), das einen im wesentlichen kugelabschnittsförmigen Vorsprung (8) aufweist, der in die Kugelpfanne (4) eingepaßt ist,
einem Gleitteil (18), und
einer Verbindungseinrichtung (32) zum Herstellen einer Klemmverbindung zwischen erstem Gelenkbauteil (2), Gleitteil (18) und zweitem Gelenkbauteil (6),
wobei die einander zugewandten Seiten von Kugelpfanne (4), Gleitteil (18) und Vorsprung (8) jeweils eine konvexe Strukturierung (24) und eine hierzu komplementär ausgebildete konkave Strukturierung (26) aufweisen,
wobei durch die Strukturierungen (24, 26) eine erste und eine zweite Drehachse (DA1, DA2) zwischen Gleitteil (18), Kugelpfanne (4) und Vorsprung (8) festgelegt wird,
**dadurch gekennzeichnet,**
**dass** die zueinander komplementären Strukturierungen (24, 26) jeweils eine Mehrzahl von parallel und in Aufsicht geradlinig verlaufenden Erhöhungen (28) und Vertiefungen (30) umfassen, und
**dass** die zueinander komplementären Strukturierungen (24, 26) vollflächig in Kontakt zueinander sind.

4. Gelenkvorrichtung nach einem der vorhergehenden Ansprüche, **dadurch gekennzeichnet, dass** die erste und zweite Drehachse (DA1 und DA2) senkrecht zueinander stehen.

5. Gelenkvorrichtung nach einem der vorhergehenden Ansprüche, **dadurch gekennzeichnet, dass** das Gleitteil (18) eine im wesentlichen halbkugelschalenförmige Form aufweist.

6. Gelenkvorrichtung einem der vorhergehenden Ansprüche, **dadurch gekennzeichnet, dass** die Strukturierungen (24, 26) auf Kugelpfanne (4), Gleitteil (18) und Vorsprung (8) vollflächig ausgebildet sind.

7. Gelenkvorrichtung nach einem der vorhergehenden Ansprüche, **dadurch gekennzeichnet, dass** die Strukturierungen (24, 26) auf Kugelpfanne (4), Gleitteil (18) und Vorsprung (8) im Schnitt senkrecht zur jeweiligen Bewegungsrichtung eine gleichmäßige Wellenform, insbesondere eine Sinuswellenform ergeben.

8. Gelenkvorrichtung nach einem der vorhergehenden Ansprüche, **dadurch gekennzeichnet, dass** das Gleitteil (4) aus einem schwingungsdämpfenden Material besteht.

9. Gelenkvorrichtung nach einem der vorhergehenden Ansprüche, **dadurch gekennzeichnet,**
**dass** Vorsprung (8), Gleitteil (18) und Kugelpfanne (4) zentrale Öffnungen (36, 38 40) aufweisen, und
**dass** die Verbindungseinrichtung (32) einen Verbindungsstift (34) umfaßt, der durch die zentralen Öffnungen (36, 38, 40) in Kugelpfanne (4), Gleitteil (18) und Vorsprung (8) hindurchragt.

10. Gelenkvorrichtung nach einem der vorhergehenden Ansprüche, **dadurch gekennzeichnet,**
**dass** das Gleitteil (18) zwischen erstem und zweitem Gelenkbauteil (2, 6) angeordnet ist,
**dass** der Vorsprung (8) eine innere, konvexe Seite (14) aufweist, auf der die konvexe Strukturierung (24) vorgesehen ist,
**dass** das Gleitteil (18) eine äußere, konkave Seite (22) mit konkaver Strukturierung (26) aufweist, die zu der konvexen Strukturierung (24) der inneren, konvexen Seite (14) des Vorsprungs (8) komplementär ist,
**dass** die zueinander komplementären Strukturierungen (24, 26) zwischen Vorsprung (8) und Gleitteil (18) die zweite Drehachse (DA2) festlegen,
**dass** die Kugelpfanne (4) eine äußere, konkave Seite (10) aufweist, auf der die konkave Strukturierung (26) vorgesehen ist,
**dass** das Gleitteil (18) eine innere, konvexe Seite (20) mit konvexer Strukturierung (24) aufweist, die zu der konkaven Strukturierung (26) auf der äußeren, konkaven Seite (10) der Kugelpfanne (4) komplementär ist, und
**dass** die zueinander komplementären Strukturierungen (24, 26) zwischen Gleitteil (18) und Kugelpfanne (4) die erste Drehachse (DA1) festlegen,

11. Gelenkvorrichtung nach Anspruch 10, **dadurch gekennzeichnet,**
**dass** der Verbindungsstift (34) auf der von dem Gleitteil (18) abgewandten Seite (16 bzw. 12) von Vorsprung (8) und Kugelpfanne (4) abgestützt ist, und
**dass** zumindest die Weite der zentralen Öffnungen (36, 38, 40) in Vorsprung (8) und Gleitteil (18) oder in Kugelpfanne (4) und Gleitteil (18) so groß ist, dass der Verbindungsstift (34) die jeweilige zentrale Öffnung mit großem Spiel durchsetzt, wodurch der maximale Schwenkwinkel zwischen den beiden Gelenkbauteilen (2, 6) festgelegt ist.

12. Gelenkvorrichtung nach einem der vorhergehenden Ansprüche 1 bis 8, **dadurch gekennzeichnet,**
**dass** der Vorsprung (8) in der Kugelpfanne (4) angeordnet ist,
**dass** der Vorsprung (8) eine innere, konvexe Seite (14) aufweist, auf der die konvexe Strukturierung (24) vorgesehen ist,
**dass** die Kugelpfanne (4) eine äußere, konkave Seite (10) aufweist, auf der die konkave Strukturierung (26) vorgesehen ist, die zu der konvexen Strukturierung (24) der inneren, konvexen Seite (14) des Vorsprungs (8) komplementär ist,
**dass** die zueinander komplementären Strukturierungen (24, 26) zwischen Vorsprung (8) und Kugelpfanne (4) die zweite Drehachse (DA2) festlegen,
**dass** die Kugelpfanne (4) eine innere, konvexe Seite (12) aufweist, auf der die konvexe Strukturierung (24) vorgesehen ist,
**dass** das Gleitteil (18) eine äußere, konkave Seite (22) mit konkaver Strukturierung (26) aufweist, die zu der konvexen Strukturierung (24) der inneren, konvexen Seite (12) der Kugelpfanne (4) komplementär ist,
**dass** die zueinander komplementären Strukturierungen (24, 26) Kugelpfanne (4) und Gleitteil (18) die erste Drehachse (DA1) festlegen,

13. Gelenkvorrichtung nach Anspruch 12, **dadurch gekennzeichnet,**
**dass** der Verbindungsstift (34) auf der von Kugelpfanne (4) abgewandten Seiten (16 bzw. 20) von Vorsprung (8) und Gleitteil (18) abgestützt ist, und
**dass** die Weite der zentralen Öffnungen (36, 38, 40) in Kugelpfanne (4) und Gleitteil (18) oder in Kugelpfanne (4) und Vorsprung (8) so groß ist, dass der Verbindungsstift (34) die jeweilige zentrale Öffnung mit großem Spiel durchsetzt, wodurch der maximale Schwenkwinkel zwischen den beiden Gelenkbauteilen (2, 6) festgelegt ist.

14. Gelenkvorrichtung nach einem der vorhergehenden Ansprüche 1 bis 8, **dadurch gekennzeichnet,**
**dass** der Vorsprung (8) in der Kugelpfanne (4) angeordnet ist,
**dass** der Vorsprung (8) eine innere, konvexe Seite (14) aufweist, auf der die konvexe Strukturierung (24) vorgesehen ist,
**dass** die Kugelpfanne (4) eine äußere, konkave Seite (10) aufweist, auf der die konkave Strukturierung (26) vorgesehen ist, die zu der konvexen Strukturierung (24) der inneren, konvexen Seite (14) des Vorsprungs (8) komplementär ist,
**dass** die zueinander komplementären Strukturierungen (24, 26) zwischen Vorsprung (8) und Kugelpfanne (4) die zweite Drehachse (DA2) festlegen,
**dass** der Vorsprung (8) eine äußere, konkave Seite (16) aufweist, auf der die konkave Strukturierung (26) vorgesehen ist,
**dass** das Gleitteil (18) eine innere, konvexe Seite (20) mit konvexer Strukturierung (24) aufweist, die zu der konkaven Strukturierung (26) der äußeren, konkaven Seite (16) des Vorsprungs (8) komplementär ist,
**dass** die zueinander komplementären Strukturierungen (24, 26) von Vorsprung (8) und Gleitteil (18) die erste Drehachse (DA1) festlegen.

15. Gelenkvorrichtung nach Anspruch 14, **dadurch gekennzeichnet,**
**dass** der Verbindungsstift auf der von dem Vorsprung. (8) abgewandten Seiten (12 bzw. 22) von Kugelpfanne (4) und Gleitteil (18) abgestützt ist, und
**dass** die Weite der zentralen Öffnungen (36, 38) in Gleitteil (18) und Kugelpfanne (4) so groß ist, dass der Verbindungsstift die jeweiligen zentrale Öffnung mit großem Spiel durchsetzt, wodurch der maximale Schwenkwinkel zwischen den beiden Gelenkbauteilen (2, 6) festgelegt ist.

16. Verstellbare Rückblickspiegel für Kraftfahrzeuge mit. einem Spiegelträger, einer Spiegelscheibe und einer Gelenkverbindung zum Verstellen der Spiegelscheibe gegenüber dem Spiegelträger, **dadurch gekennzeichnet, dass** die Gelenkvorrichtung eine Gelenkvorrichtung nach einem der vorhergehenden Ansprüche ist.

## Claims

1. A linkage arrangement for the placement of two components at an angle to one another, in particular for rearview mirrors with adjustable mirror panes, with
a first linkage component (2) including a ball socket (4),
a second linkage component (6) having a projection (8) of an essentially spherical sectional shape which is fitted into said ball socket (4),
a slide member (18), and
connection means (32) for establishing a clamping connection between first linkage component (2), slide member (18), and second linkage component (6),
wherein the mutually facing sides of ball socket (4), slide member (18), and projection (8) each have a convex profiling (24) and a concave profiling (26) formed complementary thereto,
wherein by means of said profilings (24, 26) a first and a second axis of rotation (DA1, DA2) are determined between slide member (18), ball socket (4), and projection (8), **characterized in that**
the concave profiling (26), at least in a non-loaded state, is curved more strongly than the convex profiling (24).

2. A linkage arrangement in accordance with claim 1, **characterized in that**
the mutually complementary profilings (24, 26) each include a plurality of ridges (28) and valleys (30) that extend in parallel and rectilinearly when seen in top view.

3. A linkage arrangement for the placement of two components at an angle to one another, in particular for rearview mirrors with adjustable mirror panes, with
a first linkage component (2) including a ball socket (4),
a second linkage component (6) having a projection (8) of an essentially spherical sectional shape which is fitted into said ball socket (4),
a slide member (18), and
connection means (32) for establishing a clamping connection between first linkage component (2), slide member (18), and second linkage component (6),
wherein the mutually facing sides of ball socket (4), slide member (18), and projection (8) each have a convex profiling (24) and a concave profiling (26) formed complementary thereto,
wherein by means of said profilings (24, 26) a first and a second axis of rotation (DA1, DA2) are determined between slide member (18), ball socket (4), and projection (8), **characterized**
**in that** the mutually complementary profilings (24, 26) each include a plurality of ridges (28) and valleys (30) that extend in parallel and rectilinearly when seen in top view, and
**in that** the mutually complementary profilings (24, 26) are in full surface contact with one another.

4. A linkage arrangement in accordance with any one of the preceding claims, **characterized in that** the first and second axes of rotation (DA1 and DA2) are disposed perpendicularly to one another.

5. A linkage arrangement in accordance with any one of the preceding claims, **characterized in that** the slide member (18) possesses a shape which is essentially a hemispherical shell.

6. A linkage arrangement in accordance with any one of the preceding claims, **characterized in that** the profilings (24, 26) on ball socket (4), slide member (18), and projection (8) are formed over the entire surface.

7. A linkage arrangement in accordance with any one of the preceding claims, **characterized in that** the profilings (24, 26) on ball socket (4), slide member (18), and projection (8) in a section transverse to the given direction of movement exhibit a regular wave shape, in particular a sine wave shape.

8. A linkage arrangement in accordance with any one of the preceding claims, **characterized in that** the slide member (4) is made of a vibration damping material.

9. A linkage arrangement in accordance with any one of the preceding claims, **characterized**
**in that** the projection (8), slide member (18), and ball socket (4) possess central openings (38, 36, 40), and
**in that** the connection means (32) include a connecting pin (34) extending through the central openings (36, 38, 40) in the ball socket (4), slide member (18), and projection (8).

10. A linkage arrangement in accordance with any one of the preceding claims, **characterized**
**in that** the slide member (18) is placed between the first and second linkage components (2, 6),
**in that** the projection (8) has a convex inner side (14) on which the convex profiling (24) is provided,
**in that** the slide member (18) has a concave outer side (22) with a concave profiling (26) which is complementary to the convex profiling (24) of the convex inner side (14) of the projection (8),
**in that** the mutually complementary profilings (24, 26) between the projection (8) and the slide member (18) determine the second axis of rotation (DA2),
**in that** the ball socket (4) has a concave outer side (10) on which the concave profiling (26) is provided,
**in that** the slide member (18) has a convex inner side (20) with convex profiling (24) which is complementary to the concave profiling (26) on the concave outer side (10) of the ball socket (4), and
**in that** the mutually complementary profilings (24, 26) between slide member (18) and ball socket (4) determine the first axis of rotation (DA1).

11. A linkage arrangement in accordance with claim 10, **characterized**
**in that** the connecting pin (34) is supported by the projection (8) and the ball socket (4) on the sides (16 and 12) remote from the sliding member, and
**in that** at least the width of the central openings (36, 38, 40) in the projection (8) and slide member (18) or in the ball socket (4) and slide member (18) has such a size that the connecting pin (34) passes through the respective central opening at a large clearance, whereby the maximum pivoting angle between the two linkage components (2, 6) is determined.

12. A linkage arrangement in accordance with any one of the preceding claims 1 to 8, **characterized**
**in that** the projection (8) is placed in the ball socket (4),
**in that** the projection (8) has a convex inner side (14) on which the convex profiling (24) is provided,
**in that** the ball socket (4) has a concave outer side (10) on which the concave profiling (26) is provided which is complementary to the convex profiling (24) of the convex inner side (14) of the projection (8),
**in that** the mutually complementary profilings (24, 26) between projection (8) and ball socket (4) determine the second axis of rotation (DA2),
**in that** the ball socket (4) has a convex inner side (12) on which the convex profiling (24) is provided,
**in that** the slide member (18) has a concave outer side (22) with concave profiling (26) which is complementary to the convex profiling (24) of the convex inner side (12) of the ball socket (4), and
**in that** the mutually complementary profilings (24, 26) of ball socket (4) and slide member (18) determine the first axis of rotation (DA1).

13. A linkage arrangement in accordance with claim 12, **characterized**
**in that** the connecting pin (34) is supported by the projection (8) and the slide member (18) on the sides (16 and 20) remote from the ball socket (4), and
**in that** the width of the central openings (36, 38, 40) in the ball socket (4) and slide member (18) or in the ball socket (4) and projection (8) has such a size that the connecting pin (34) passes through the given central opening at a large clearance, whereby the maximum pivoting angle between the two linkage components (2, 6) is determined.

14. A linkage arrangement in accordance with any one of the preceding claims 1 to 8, **characterized**
**in that** the projection (8) is placed in the ball socket (4),
**in that** the projection (8) has a convex inner side (14) on which the convex profiling (24) is provided,
**in that** the ball socket (4) has a concave outer side (10) on which the concave profiling (26) is provided which is complementary to the convex profiling (24) of the convex inner side (14) of the projection (8),
**in that** the mutually complementary profilings (24, 26) between projection (8) and ball socket (4) determine the second axis of rotation (DA2),
**in that** the projection (8) has a concave outer side (16) on which the concave profiling (26) is provided,
**in that** the slide member (18) has a convex inner side (20) with convex structuring (24) which is complementary to the concave profiling (26) of the concave outer side (16) of the projection (8),
**in that** the mutually complementary profilings (24, 26) of projection (8) and slide member (8) determine the first axis of rotation (DA1).

15. A linkage arrangement in accordance with claim 14, **characterized**
**in that** the connecting pin (34) is supported by the ball socket (4) and the slide member (18) on those sides (12 and 22) remote from the projection (8), and
**in that** the width of the central openings (36, 38, 40) in the slide member (18) and in the projection (8) or in the projection (8) and the ball socket (4) has such a size that the connecting pin (34) passes through the given central opening at a large clearance, whereby the maximum pivoting angle between the two linkage components (2, 6) is determined.

16. Adjustable rearview mirror arrangement for automotive vehicles including a mirror support, a mirror pane and a linkage arrangement for adjusting the mirror pane relative to the mirror support, **characterized in that** the linkage arrangement is a linkage arrangement in accordance with any one of the preceding claims.

## Revendications

1. Système d'articulation pour l'agencement de deux composants en relation mutuellement angulaire, en particulier pour un rétroviseur muni d'un plateau de miroir réglable, comprenant
un premier élément d'articulation (2) comportant une cavité sphérique (4),
un deuxième élément d'articulation (6), qui porte une saillie (8) de forme essentiellement sphérique, laquelle vient s'ajuster dans la cavité sphérique (4), un élément de coulissement (18), et
un agencement de couplage (32) destiné à réaliser un accouplement par serrage entre le premier élément d'articulation (2), l'élément de coulissement (18) et le deuxième élément d'articulation (6),
les faces opposées entre elles de la cavité sphérique (4), de l'élément de coulissement (18) et de la saillie (8) possédant chacune une structure convexe (24) et une structure concave qui lui est complémentaire,
au moyen des structures (24,26), un premier et un deuxième axes de pivotement (DA1,DA2) étant définis entre l'élément de coulissement (18), la cavité sphérique (4) et la saillie (8),
**caractérisé en ce que**
la structure concave (26), au moins à l'état équilibré, est de plus grande courbure que la structure convexe (24).

2. Système d'articulation selon la revendication 1, **caractérisé en ce que** les structures mutuellement complémentaires comportent chacune une multiplicité d'exhaussements (28) et d'évidements (30) parallèles et de géométrie rectiligne continue.

3. Système d'articulation pour l'agencement de deux composants en relation mutuellement angulaire, en particulier pour un rétroviseur muni d'un plateau de miroir réglable, comprenant
un premier élément d'articulation (2) comportant une cavité sphérique (4),
un deuxième élément d'articulation (6), qui porte une saillie (8) de forme essentiellement sphérique, laquelle vient s'ajuster dans la cavité sphérique (4), un élément de coulissement (18), et
un agencement de couplage (32) destiné à réaliser un accouplement par serrage entre le premier élément d'articulation (2), l'élément de coulissement (18) et le deuxième élément d'articulation (6),
les faces opposées entre elles de la cavité sphérique (4), de l'élément de coulissement (18) et de la saillie (8) possédant chacune une structure convexe (24) et une structure concave qui lui est complémentaire,
au moyen des structures (24,26), un premier et un deuxième axes de pivotement (DA1,DA2) étant définis entre l'élément de coulissement (18), la cavité sphérique (4) et la saillie (8),
**caractérisé en ce que**
les structures mutuellement complémentaires (24,26), comprennent chacune une multiplicité d'exhaussements (28) et d'évidements (30) parallèles et de géométrie rectiligne continue, et
**en ce que** les structures mutuellement complémentaires (24,26) se trouvent en contact mutuel sur toute leur surface.

4. Système d'articulation selon l'une des revendications précédentes, **caractérisé en ce que** les premier et second axes de pivotement (DA1 et DA2) sont orientés verticalement l'une par rapport à l'autre.

5. Système d'articulation selon l'une des revendications précédentes, **caractérisé en ce que** l'élément de coulissement (18) présente la forme d'une coque essentiellement demi-sphérique.

6. Système d'articulation selon l'une des revendications précédentes, **caractérisé en ce que** les structures (24,26) de la cavité sphérique (4), de l'élément de coulissement (18) et de la saillie (8) sont formées sur toute la surface.

7. Système d'articulation selon l'une des revendications précédentes, **caractérisé en ce que** les structures (24,26) de la cavité sphérique (4), de l'élément de coulissement (18) et de la saillie (8) donnent, dans la section perpendiculaire au sens de déplacement spécifique, une forme d'onde régulière, particulièrement une forme d'onde sinusoïdale.

8. Système d'articulation selon l'une des revendications précédentes, **caractérisé en ce que** l'élément de coulissement (4) est composé d'un matériau antivibratoire.

9. Système d'articulation selon l'une des revendications précédentes, **caractérisé en ce que**
la saillie (8), l'élément de coulissement (18) et la cavité sphérique (4) comportent une ouverture centrale (36,38,40), et
**en ce que** l'agencement de couplage (32) comprend une broche de raccordement (34), laquelle dépasse par les ouvertures centrales (36,38,40) pratiquées dans la cavité sphérique (4), l'élément de coulissement (18) et la saillie (8).

10. Système d'articulation selon l'une des revendications précédentes, **caractérisé en ce que**
L'élément de coulissement (18) est disposé entre le premier et le deuxième éléments d'articulation (2,6), **en ce que** la saillie (8) comporte une face convexe interne (14) sur laquelle est formée la structure convexe (24),
**en ce que** l'élément de coulissement (18) comporte une face concave externe (22) dotée d'une structure concave (26), laquelle est complémentaire de la structure convexe (24) de la face convexe interne (14) de la saillie (8),
**en ce que** les structures mutuellement complémentaires (24,26) définissent le deuxième axe de pivotement (DA2),
entre la saillie (8) et l'élément de coulissement (18) **en ce que** l'élément de coulissement (4) comporte une face concave externe (10) dotée d'une structure convexe (24), laquelle est complémentaire de la structure concave (26) formée sur la face concave externe (10) de la cavité sphérique (4), et
**en ce que** les structures mutuellement complémentaires (24,26) définissent le premier axe de pivotement (DA1) entre l'élément de coulissement (18) et la cavité sphérique (4).

11. Système d'articulation selon la revendication 10,
**caractérisé en ce que**
la broche de raccordement (34) repose en appui sur la face éloignée (16 ou 12) de l'élément de coulissement (18), de la saillie (8) et de la cavité sphérique (4), et
**en ce qu'**au moins le diamètre des ouvertures centrales (36,38,40) pratiquées dans la saillie (8) et dans l'élément de coulissement (18), ou dans la cavité sphérique (4) et dans l'élément de coulissement (18), est si grand que la broche de raccordement (34) pénètre dans chacune des ouvertures centrales respectives avec un jeu important, moyennant quoi l'angle de pivotement entre les deux composants articulés (2,6) est défini.

12. Système d'articulation selon l'une des revendications précédentes 1 à 8, **caractérisé en ce que**
la saillie (8) est formée dans la cavité sphérique (4) ,
**en ce que** la saillie (8) comprend une face convexe interne (14) sur laquelle est formée la structure convexe (24),
**en ce que** la cavité sphérique (4) comporte une face concave externe (10) sur laquelle est formée la structure concave (26), laquelle est complémentaire de la structure convexe (24), de la face convexe interne (14) de la saillie (8),
**en ce que** les structures mutuellement complémentaires (24,26) définissent le deuxième axe de pivotement (DA2) entre la saillie (8) et la cavité sphérique (4).

13. Système d'articulation selon la revendication 12,
**caractérisé en ce que**
la broche de raccordement (34) repose en appui sur la face éloignée (16 ou 20) de la cavité sphérique (4), de la saillie (8) et de l'élément de coulissement (18), et
**en ce que** le diamètre des ouvertures centrales (36,38,40) pratiquées dans la cavité sphérique (4) et dans la saillie (8) est si grand que la broche de raccordement (34) dépasse par chacune des ouvertures centrales spécifiques avec un jeu important, moyennant quoi l'angle de pivotement maximal entre les deux éléments articulés (2,6) est défini.

14. Système d'articulation selon l'une des revendications précédentes 1 à 8, **caractérisé en ce que**
la saillie (8) est formée dans la cavité sphérique (4),
**en ce que** la cavité sphérique (8) comporte une face convexe interne (14) sur laquelle est formée la structure convexe (24),
**en ce que** la cavité sphérique (4) comporte une face concave externe (10) sur laquelle est formée la structure concave (26), laquelle est complémentaire de la structure convexe (24) de la face convexe interne (14) de la saillie (8),
**en ce que** les structures mutuellement complémentaires (24,26) définissent le deuxième axe de pivotement (DA 2).
entre la saillie (8) et la cavité sphérique (4),
**en ce que** la saillie (8) comporte une face concave externe (16) sur laquelle est formée la structure concave (26),
**en ce que** l'élément de coulissement (18) comporte une face convexe interne (20) dotée d'une structure concave (26),
**en ce que** l'élément de coulissement (18) comporte une face convexe interne (20) dotée d'une structure convexe (24), laquelle est complémentaire de la structure concave (26) de la face concave externe (16) de la saillie (8),
**en ce que** les structures mutuellement complémentaires (24,26) définissent le premier axe de pivotement (DA1) de la saillie (8) et de l'élément de coulissement (18) .

15. Système d'articulation selon la revendication 14,
**caractérisé en ce que**
la broche de raccordement repose en appui sur la face éloignée (12 ou 22) de la saillie (8), de la cavité sphérique (4) et de l'élément de coulissement (18), et **en ce que** le diamètre des ouvertures centrales (36,38) pratiquées dans l'élément de coulissement (18) et dans la cavité sphérique (4) est si grand que la broche de raccordement dépasse de chacune des ouvertures centrales avec un jeu important, moyennant quoi l'angle de pivotement maximal est défini entre les deux éléments d'articulation (2,6).

16. Rétroviseur réglable pour véhicule automobile muni d'un support de miroir, d'un plateau de miroir et d'un assemblage à rotule destiné au réglage du plateau de miroir par rapport au support de miroir, **caractérisé en ce que** le système d'articulation est un Système d'articulation selon l'une des revendications précédentes.
